# EUROPEAN PATENT APPLICATION

(11) **EP 4 675 225 A1**
(43) Date of publication of application: **07.01.2026**
(21) Application number: 25187205.7
(22) Date of filing: 03.07.2025
(51) Int. Cl.: G01C 13/00, G01C 11/06

(54) **APPARATUS AND METHOD FOR DETERMINING COASTLINE**

(30) Priority: 03.07.2024 KR 20240087584
(71) Applicant: Korea Institute of Ocean Science and Technology, Busan 49111 (KR)
(72) Inventor: LEE, Moonjin, 34033 DAEJEON (KR); KIM, Tae Sung, 35209 DAEJEON (KR); KIM, In Young, 35265 DAEJEON (KR)
(74) Representative: EP&C

(57) **Abstract**

A coastline determination apparatus and method are disclosed. The method for determining a coastline includes: obtaining a predicted high tide time, setting a plurality of time slots by equally dividing a preset time range before and after the obtained predicted high tide time, acquiring satellite images including the coastline for each of the set plurality of time slots, extracting the coastline from each of the acquired satellite images through image analysis, and overlaying the satellite images from which the coastline has been extracted for the respective time slots to extract the highest tide line, and determining the extracted highest tide line as the coastline of a sea area.

## Description

### CROSS REFERENCE TO RELATED APPLICATION

The present application claims priority to Korean Patent Application No. 10-2024-0087584 (July 3, 2024.), filed, the entire contents of which are incorporated herein for all purposes by this reference.

### BACKGROUND

### Technical Field

The present invention relates to an apparatus and method for determining a coastline.

### Description of Related Technology

A coastline refers to a line where the land surface and sea surface intersect. Since the sea surface continuously rises and falls due to tides and waves, the position of the coastline is not constant. The coastline at high tide is called the high tide coastline, and the coastline at low tide is called the low tide coastline. However, in general, the coastline refers to the boundary line between the mean sea level and the land.

In particular, the coastline is a line connecting the approximate maximum high tide levels to which the seawater can reach. Strictly speaking, the coastline should be extracted by connecting the highest tide levels over a period of 18.6 years.

However, since this is practically difficult, it is necessary to accurately analyze the highest tide levels over the longest feasible period and extract the coastline accordingly. Furthermore, in order to accurately determine the highest tide level in a localized sea area over a short-term period, it is necessary to analyze the high tide levels by considering the spatial distribution of high tide levels and the temporal variation in the occurrence of high tides for each sea area, and extract the coastline by connecting the highest tide levels among them.

### Prior Art Literature

### Patent Document

Korean Patent Application Registration No. 10-0571121 (April 7, 2006)

### SUMMARY

The present invention is directed to providing an apparatus and method for determining a coastline by acquiring satellite images including the coastline for each time slot set based on the high tide time, and determining the coastline using the acquired satellite images.

According to an aspect of the present invention, a method for determining a coastline performed by a coastline determination apparatus is disclosed.

A method for determining a coastline according to an embodiment of the present invention includes: obtaining a predicted high tide time, setting a plurality of time slots by equally dividing a preset time range before and after the obtained predicted high tide time, acquiring satellite images including the coastline for each of the set plurality of time slots, extracting the coastline from each of the acquired satellite images including the coastline for the respective time slots through image analysis, and overlaying the satellite images for the plurality of time slots from which the coastline has been extracted to extract the highest tide line, and determining the extracted highest tide line as the coastline of the sea area.

According to another aspect of the present invention, a coastline determination apparatus is disclosed.

A coastline determination apparatus according to an embodiment of the present invention includes a memory for storing instructions and a processor for executing the instructions, wherein the instructions cause the processor to perform: obtaining a predicted high tide time, setting a plurality of time slots by equally dividing a preset time range before and after the obtained predicted high tide time, acquiring satellite images including the coastline for each of the set plurality of time slots, extracting the coastline from each of the acquired satellite images including the coastline for the respective time slots through image analysis, and overlaying the satellite images for the plurality of time slots from which the coastline has been extracted to extract the highest tide line, and determining the extracted highest tide line as the coastline of the sea area.

The coastline determination apparatus and method according to an embodiment of the present invention acquire satellite images including the coastline for each time slot set based on the high tide time, and determine the coastline using the acquired satellite images, thereby enabling accurate determination of the coastline by considering the spatial distribution of high tide levels and the temporal variation in the occurrence of high tides within a period shorter than 18.6 years.

### BRIEF DESCRIPTION OF THE DRAWINGS

FIG. 1 is a flowchart schematically illustrating a method for determining a coastline performed by a coastline determination apparatus according to an embodiment of the present invention.
FIG. 2 is a diagram schematically illustrating the configuration of a coastline determination apparatus according to an embodiment of the present invention.

### DETAILED DESCRIPTION

Unless clearly stated otherwise in context, singular expressions used in this specification include plural expressions as well. In this specification, terms such as "consist of" or "include" should not be interpreted as necessarily including all of the described components or steps, but should be interpreted as potentially excluding some of the components or steps, or including additional components or steps. Also, terms such as "unit" and "module" described in this specification refer to a unit that processes at least one function or operation, and may be implemented as hardware, software, or a combination of hardware and software.

Hereinafter, various embodiments of the present invention will be described in detail with reference to the accompanying drawings.

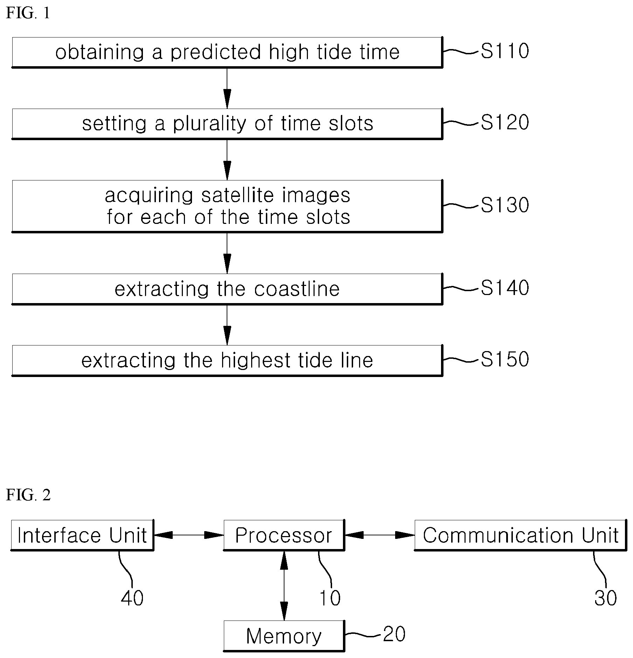

FIG. 1 is a flowchart schematically illustrating a method for determining a coastline performed by a coastline determination apparatus according to an embodiment of the present invention.

In step S110, the coastline determination apparatus obtains a predicted high tide time.

Here, the predicted high tide time may be the high tide time forecasted by a tide station. For example, in Korea, there are 57 tide stations, and each tide station collects one year's worth of high tide time data for the relevant sea area and may forecast the high tide times for the following year using the collected data.

In step S120, the coastline determination apparatus sets a plurality of time slots by equally dividing a preset time range before and after the obtained predicted high tide time.

For example, five or more time slots may be set to be evenly distributed from one hour before to one hour after the predicted high tide time.

In step S130, the coastline determination apparatus acquires satellite images including the coastline for each of the set plurality of time slots.

Here, in an embodiment the satellite images include at least 5 km on the land side and at least 10 km on the sea side centered on the coastline, and may be acquired within 3 days of the same time slot as the set time slots. Also, advantageously the satellite images are corrected through self-selection of Ground Control Points (GCPs), and if no self-GCPs exist, they may be secured through field observation.

For example, the satellite images may be acquired considering the 50-minute tidal time difference caused by the 12-hour 25-minute tidal cycle. That is, assuming the predicted high tide time on a certain day is 13:00, the satellite image corresponding to the predicted high tide time may be acquired as the satellite image from 13:50 of the previous day. Furthermore, if a satellite image at 14:00, which is one hour after the predicted high tide time of a certain day, does not exist, a satellite image at 14:50 on the following day may be acquired. In this way, satellite images of other days corresponding to the set time slots may be acquired.

In step S140, the coastline determination apparatus extracts the coastline from each of the acquired satellite images including the coastline for the plurality of time slots through image analysis.

In step S150, the coastline determination apparatus overlays the satellite images for the plurality of time slots from which the coastline has been extracted to extract the highest tide line, and determines the extracted highest tide line as the coastline of the relevant sea area.

That is, among the coastlines of the satellite images for the plurality of time slots, the innermost coastline on the land side may be determined as the coastline of the relevant sea area.

Through this, the coastline determination apparatus can determine the coastline for each preset sea area, and by using the determined coastline for each sea area, detailed coastline data with a scale of for example 1:1000 can be generated.

FIG. 2 is a diagram schematically illustrating the configuration of a coastline determination apparatus according to an embodiment of the present invention.

Referring to FIG. 2, a coastline determination apparatus according to an embodiment of the present invention includes a processor 10, a memory 20, a communication unit 30, and an interface unit 40.

The processor 10 may be a CPU or a semiconductor device that executes processing instructions stored in the memory 20.

The memory 20 may include various types of volatile or non-volatile storage media. For example, the memory 20 may include ROM, RAM, and the like.

For example, the memory 20 may store instructions for performing the coastline determination method according to an embodiment of the present invention.

The communication unit 30 is a means for transmitting and receiving data to and from other devices via a communication network.

The interface unit 40 may include a network interface for connecting to a network and a user interface.

Meanwhile, the components of the above-described embodiments can be easily understood from a procedural perspective. In other words, each component may be regarded as an individual process. Also, the processes of the above-described embodiments can be easily understood from the viewpoint of the device components.

Furthermore, the technical contents described above can be implemented in the form of program instructions executable by various computer means and recorded on a computer-readable medium. The computer-readable medium may include program instructions, data files, data structures, or any combination thereof.

The program instructions recorded on the medium may be specially designed and configured for the embodiments or may be known and usable by those skilled in the art in computer software. Examples of computer-readable recording media include magnetic media such as hard disks, floppy disks, and magnetic tapes; optical media such as CD-ROMs and DVDs; magneto-optical media such as floptical disks; and hardware devices specially configured to store and execute program instructions, such as ROM, RAM, and flash memory.

Examples of program instructions include not only machine language code generated by compilers but also high-level language code that can be executed by a computer using interpreters or the like. The hardware device may be configured to operate as one or more software modules to perform the operations of the embodiments, and vice versa.

The embodiments of the present invention disclosed above are for illustrative purposes, and those skilled in the art having ordinary knowledge of the invention will appreciate that various modifications, changes, and additions may be made within the spirit and scope of the present invention. Such modifications, changes, and additions should be regarded as falling within the scope of the following claims.

### Description of Reference Numerals

10: Processor
20: Memory
30: Communication Unit
40: Interface Unit

## Claims

1. A method for determining a coastline performed by a coastline determination apparatus, comprising:
obtaining a predicted high tide time;
setting a plurality of time slots by equally dividing a preset time range before and after the obtained predicted high tide time;
acquiring satellite images including the coastline for each of the set plurality of time slots;
extracting the coastline from each of the acquired satellite images including the coastline for the respective time slots through image analysis; and
overlaying the satellite images for the plurality of time slots from which the coastline has been extracted to extract the highest tide line, and determining the extracted highest tide line as the coastline of a sea area.

2. The method for determining a coastline according to claim 1, wherein the step of setting the plurality of time slots comprises:
setting five or more time slots to be evenly distributed from one hour before to one hour after the predicted high tide time.

3. The method for determining a coastline according to claim 1 or claim 2, wherein the step of acquiring the satellite images comprises:
acquiring satellite images that include at least 5 km on the land side and at least 10 km on the sea side centered on the coastline, and are within 3 days of the same time slot as the set plurality of time slots.

4. The method for determining a coastline according to any one of the preceding claims, wherein the step of determining the extracted highest tide line as the coastline of a sea area comprises:
determining, as the coastline of the sea area, the innermost coastline on the land side among the coastlines in the satellite images for the plurality of time slots.

5. A coastline determination apparatus comprising:
a memory configured to store instructions; and
a processor configured to execute the instructions,
wherein the instructions cause the processor to perform:
obtaining a predicted high tide time;
setting a plurality of time slots by equally dividing a preset time range before and after the obtained predicted high tide time;
acquiring satellite images including the coastline for each of the set plurality of time slots;
extracting the coastline from each of the acquired satellite images including the coastline for the respective time slots through image analysis; and
overlaying the satellite images for the plurality of time slots from which the coastline has been extracted to extract the highest tide line, and determining the extracted highest tide line as the coastline of a sea area.
